# EUROPEAN PATENT APPLICATION

(11) **EP 0 917 344 A1**
(43) Date of publication of application: **19.05.1999**
(21) Application number: 97119698.5
(22) Date of filing: 11.11.1997
(51) Int. Cl.: H04N 1/10

(54) **Adjustable flatbed scanner**

(71) Applicant: Primax Electronics Ltd, Hsi Chih Town, Taipei Hsien (TW)
(72) Inventor: Wieringa, Fred, Hsi Chih Town, Taipei Hsien (TW)
(74) Representative: Bauer, Robert, Dipl.-Ing.

(57) **Abstract**

A flatbed scanner (10) is disclosed whose working angle can be moderately adjusted for a user's convenience. The scanner (10) comprises a rectangular housing (12) with a transparent platform (28) on its top side (16) for placing thereupon documents (14, 15) to be scanned, and a cover (13) movably connected to said top side (16) for covering the documents (14, 15) placed on the transparent platform (28). The housing (12) comprises three recesses (30, 31, 39) installed near the rear left corner, rear right corner and one of the front corners of its bottom side (18), each with an extendable supporting means (32, 36, 40) installed therein for selectively setting the transparent platform (28) to a horizontal or one of two tilted working positions. The transparent platform (28) further comprises a document clamping device (60) adjacent one edge (22) for temporarily clamping documents (15) to be scanned to prevent them from flicking away.

## Description

The present invention relates to an adjustable flatbed scanner, and more particularly, to an adjustable flatbed scanner over which the working angle of the scanner can be moderately adjusted.

Flatbed scanners are commonly used in today's office environment for scanning documents into computers. Traditional flatbed scanners can only be placed horizontally when scanning documents. Two problems are commonly experienced in using such horizontally placed flatbed scanners: First, it is difficult for a user sitting in front of such a flatbed scanner to manipulate documents placed on the scanner. Second, documents placed on the scanner can easily flick away when closing or opening the cover of the scanner. Such a flicking problem usually results in tilted document images scanned into a connected computer.

This in mind, the invention as claimed aims at providing a flatbed scanner in which the problem of flicking documents can be avoided.

This is achieved by the present invention as claimed primarily in that the two supporting means pivotally installed in the respective recesses can be extended outwardly from the recesses to lift up one side of the scanner. Avoiding the flicking of documents to be scanned is further assisted by providing a document clamping device according to claim 5 for clamping documents to be scanned. This renders it possible to scan several documents simultaneously.

In the following the invention is illustrated by way of example with reference to the accompanying drawings, in which
- Fig. 1: is a perspective view of a flatbed scanner according to the present invention,
- Fig. 2: is a side view of the flatbed scanner shown in Fig. 1,
- Fig. 3: is a bottom view of the flatbed scanner shown in Fig. 1,
- Fig. 4: is a section through a portion of the flatbed scanner along line 4-4 shown in Fig. 3, and
- Fig. 5: is a section through a portion of the flatbed scanner along line 5-5 shown in Fig. 1.

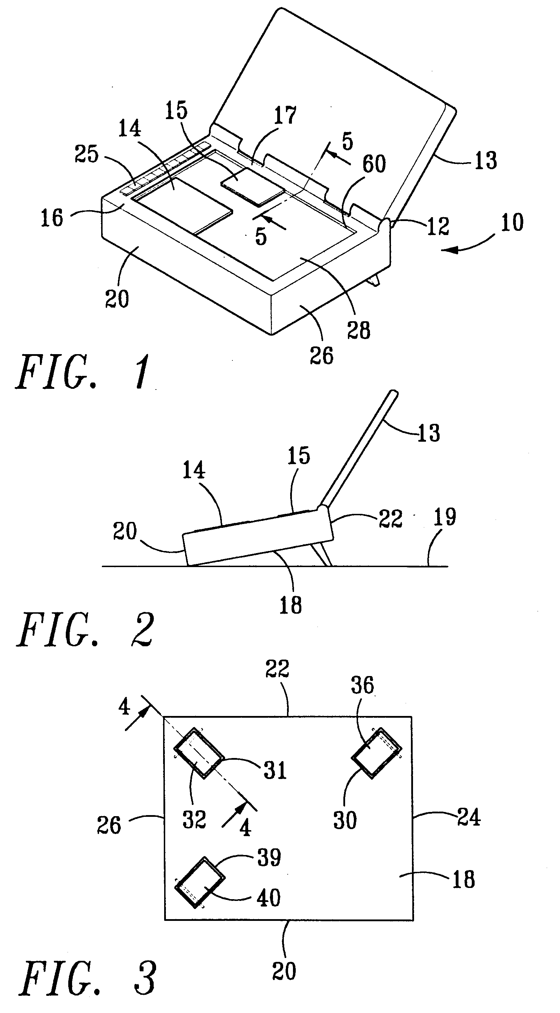

The flatbed scanner 10 shown in Figs. 1 to 3 comprises an approximately rectangular housing 12 and a cover 13. The housing 12 comprises a top side 16 and a bottom side 18, a front side 20, a rear side 22, a left side 24 and a right side 26.

The top side 16 of the housing 12 comprises a transparent platform 28 which is a transparent glass pane for placing documents to be scanned such as 14 and 15, and a control panel 25 for controlling operations of the scanner 10. The bottom side 18 of the housing 12 can be placed on a horizontal working surface 19 such as a table. The top side 16 of the housing 12 further comprises a rear edge 17, and the transparent platform 28 adjacent to the rear edge 17 is equipped with a document clamping device 60 for clamping documents as, for example, 15 to prevent them from sliding across the tilted transparent platform 28. One end of the cover 13 is pivotally connected to the top side 16 of the housing 12 for covering the documents 14 and 15 placed on the transparent platform 28. The scanner 10 further comprises an electronic scanning device (not shown), installed inside the housing 12 for scanning the documents, such as 14 and 15, placed on the transparent platform 28.

The bottom side 18 of the housing 12 comprises three recesses 30, 31 and 39 separately installed near the rear left corner defined by the rear side 22 and left side 24, the rear right corner defined by the rear side 22 and right side 26, and the right front corner defined by the front side 20 and right side 26 of the housing 12. Each of the the three recesses 30, 31 and 39 comprises a supporting means 36, 32 and 40, respectively pivotally installed inside. When these three supporting means 36, 32 and 40 are withdrawn into the three recesses 30, 31 and 39, the bottom side 18 of the scanner 10 will rest flat on the working surface 19, which will set the transparent platform 28 to a horizontal working position. When the two neighboring supporting means 32 and 36 are extended outward, the rear side 22 of the housing 12 will be lifted up, which will set the transparent platform 28 to a forwardly tilted working position. The two supporting means 32 and 36 are symmetrically positioned between the rear left corner and rear right corner for balancedly lifting up the rear side 22 of the housing 12 when the supporting means 32 and 36 are extended. When the two neighboring supporting means 32 and 40 are extended, the right side 26 of the housing 12 will be lifted up, which will set the transparent platform 28 to a working position tilted to the left. The two supporting means 32 and 40 are also symmetrically positioned between the right rear corner and the right front corner for balancedly lifting up the right side 26 of the housing 12.

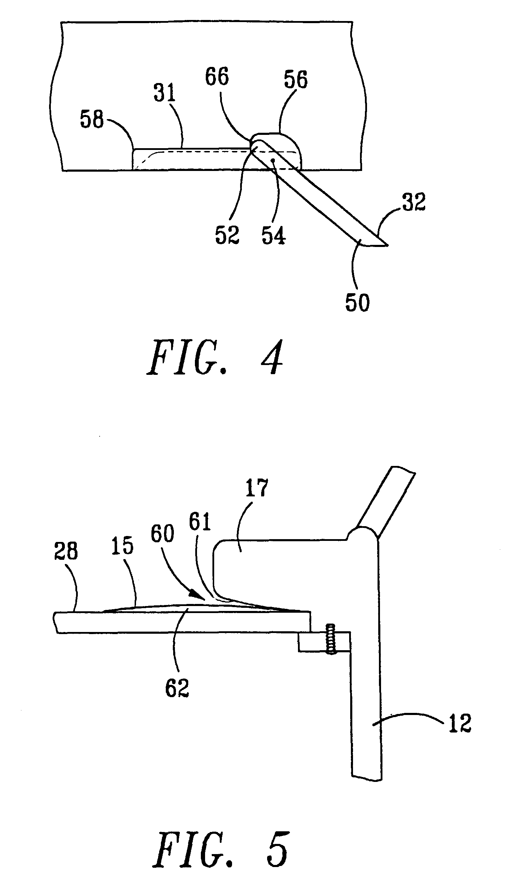

Fig. 4 illustrates the structure of the recess 31 and supporting means 32. The structure of the two recesses 30 and 39 and their supporting means 36 and 40 is the same.

The supporting means 32 comprises a short leg 52, a long leg 50 and an intermediate pivot 54 installed in the recess 31. The recess 31 comprises an arc shaped portion 56 and a flat portion 58. The arc shaped portion 56 provides a rotating space for the short leg 52 of the supporting means 32. When the supporting means 32 is rotated outwards to an extended position, the short leg 52 will abut against the inner wall 66 of the arc shaped portion 56 of recess 31 so that the scanner 10 can firmly rest on the supporting means 32. When the supporting means 32 is rotated back into the recess 31, its long leg 50 is positioned inside the flat portion 58 of recess 31 so that the scanner 10 can rest horizontally on the working surface 19 shown in Fig. 2.

Fig. 5 illustrates the structure of the document clamping device 60. The document clamping device 60 comprises an arc shaped front 61 below the rear edge 17 of the top side 16 of the housing 12 and forming a tapered gap 62 between the arc shaped front 61 and the transparent platform 28. The document clamping device 60 is used for clamping an edge of the documents to be scanned, such as document 15. When the scanner 10 is in a tilted position, the document clamping device 60 can be used to retain one or more documents at the rear edge 17 of the top side 16, whereas, when the scanner 10 is in a horizontal position, the document clamping device 60 can be used to prevent documents from flicking away, as mentioned above.

## Claims

1. A flatbed scanner (10) comprising:
a. an approximately rectangular housing (12) which comprises a top side (16) and a bottom side (18), the bottom side (18) comprising a rear left corner, a rear right corner, a left front corner and a right front corner, and the top side (16) of the housing (12) comprising a transparent platform (28) for placing thereupon documents (14, 15) to be scanned;
b. a cover (13) movably connected to the top side (16) of the housing (12) for covering documents (14, 15) placed on the transparent platform (28); and
c. an electronic scanning device installed inside the housing (12) for scanning the documents (14, 15) placed on the transparent platform (28);
**characterized** in that:
the housing (12) comprises two recesses (30, 31) installed near the rear left corner and the rear right corner of the bottom side (18), and two supporting means (32, 36) pivotally installed inside the two recesses (30, 31) for selectively setting the transparent platform (28) of the scanner (10) to a horizontal working position by positioning the two supporting means inside the two recesses and a tilted working position by extending the two supporting means (32, 36) from the two recesses (30, 31).

2. The flatbed scanner (10) of claim 1 wherein the two supporting means (32, 36) are symmetrically positioned between the rear left corner and rear right corner for balancedly lifting up the rear side (22) of the housing (12) when the two supporting means (32, 36) are extended from the two recesses (30, 31).

3. The flatbed scanner (10) of claim 1, further comprising a recess (39) installed near one front corner and a supporting means (40) pivotally installed inside this recess (39) so that the transparent platform (28) can be set to either of two tilted working positions by selectively extending two neighboring ones (32/36 or 32/40) of the three supporting means (32, 36, 40).

4. The flatbed scanner (10) of claim 3 wherein the two supporting means (32, 40) near one lateral side (26) of the housing (12) are symmetrically positioned between the respective rear corner and front corner for balancedly lifting up the respective lateral side (26) of the scanner (10) when the two supporting means (32, 40) are extended from their two recesses (31, 39).

5. The flatbed scannner (10) of claim 1 wherein the transparent platform (28) further comprises a document clamping device (60) adjacent to the rear edge (22) of the top side (16) of the housing (12) for temporarily clamping documents (15) to be scanned.

6. The flatbed scanner (10) of claim 5, wherein the document clamping device (60) comprises a tapered gap (62) adjacent to the transparent platform (28).
